# EUROPEAN PATENT APPLICATION

(11) **EP 2 207 348 A2**
(43) Date of publication of application: **14.07.2010**
(21) Application number: 09150336.7
(22) Date of filing: 09.01.2009
(51) Int. Cl.: H04N 5/445, G06F 17/30, G06Q 30/00

(54) **Recommender method and system for cross-domain recommendation**

(30) Priority: 08.01.2009 EP 09150225
(71) Applicant: Axel Springer Digital TV Guide GmbH, 10117 Berlin (DE)
(72) Inventor: Barbieri, Mauro, 5613 LC Eindhoven (NL); Pronk, Serverius, 5262 CN Vught (NL)
(74) Representative: Eisenführ, Speiser & Partner

(57) **Abstract**

For metadata-based recommender systems, the ability to make cross-domain recommendations is limited by the scope of the metadata in a profile. For example, a profile concerning movies cannot be used directly to do recommendations about food items. The problem is that a user who has not yet built a profile in a certain domain cannot receive good recommendations in that domain. An apparatus for controlling of a recommender system is disclosed which provides recommendations in a new domain by using one or more profiles from other, known domains. This is achieved by forming or using *translations* or *relations* between the known domains and the new domain and by exploiting these translations or relations to extend the profiles in the known domains into the new domain. The thus generated profile in the new domain may subsequently be generalized.

## Description

### FIELD OF THE INVENTION

The present invention relates to an apparatus, a method and a computer program product for providing recommendations for content items, e.g. a product or service, associated with a new domain to a user using available profile information for content items associated with known domains.

### BACKGROUND OF THE INVENTION

By the ongoing proliferation of digitally networked equipment a new range of digital technologies has emerged that personify the concept of convergence. Moreover, also propagation of new communication technologies enables traditional broadcast and the Internet to converge, as can be seen for example with Internet Protocol TV (IPTV), Peer-to-Peer networks (P2P), Mobile TV etc. From another point of view, convergence may be seen as the product of the transition from analogue to digital, according to which all forms of content, e.g. voice, text, pictures, audio and video, are undifferentiated bits of data.

However, converged devices that provide access to broadcast and ever growing libraries of digital content poses both challenges and opportunities for consumers, i.e. the users of such devices, and the content provided thereby. Access to ever growing libraries of broadcast and digital media raises the possibility of "choice fatigue"; as the number of choices grows, the negatives escalate until a viewer becomes overloaded. At this point, choice no longer liberates, but debilitates. In the context of TV sets a functionality called Electronic Programme Guide (EPG) receives an increasing interest, which enables users to mediate their audio and video (A/V) content. In the first place, EPGs just provide a more organized access to the content, but do not really free the user from the burden of choice, thus one central aspect of further research and development is focused on so-called recommender technologies.

Accordingly, the use of recommender technology is steadily being introduced into the market. Among various examples, websites offer some kind of recommender functionality to support users in finding content items, such as movies or books. Further, electronics devices, e.g. personal video recorders (PVRs), use recommender technology for automatic filtering content items. Thus, recommenders are becoming a popular tool to retrieve, from a vast amount of content items such as from repositories for audio/video (A/V) content, e.g. songs, television (TV) programs, movies, etc., or from catalogues for products, e.g. books, and the like, only those items a user or a group of users likes. Recommenders can be offered as a stand-alone service, or as add-on functionality to an existing service. They increasingly appear in consumer devices, such as digital video recorders (DVRs).

Furthermore, recommender systems are increasingly being applied to individualize or personalize services and products by learning a so-called user profile that may be based on rating feedback from individual or a group of users on selected content items. For that purpose, machine-learning techniques can be used to infer the ratings for new items. Thus, a recommender can typically be configured to learn the preference of a user, based on ratings that the user supplies on items; where ratings may be simple binary classifications, such as "like" and "dislike", respectively, or based on a more elaborate classification into a range of like-degrees. As such, the user rating provides an interface by means of which the user can teach the recommender about his preferences. Grossly speaking, there are two types of recommender systems, those based on a community of users and those based on metadata.

The first type of recommender systems is known as so-called *collaborative filtering,* where either (i) members of the community are characterized by the ratings they give to items or (ii) items are characterized by the ratings they receive from the members of the community. These characterizations (i) and (ii) may be used to define similarities among users or items, respectively. Thus, for a specific member of the community and a specific item that has not yet been rated by this member, these similarities can be used to infer for this member a rating for this item by combining ratings of similar users or similar items, respectively. In the context of A/V content, collaborative filtering can be seen as the ability to rate and/or tag videos or audio tunes. The level to which systems may use collaborative filtering ranges from simply rating content up to building "profiles" to provide recommendations and thus content to users.

The second type of recommender systems uses available metadata about items, which typically comes in the form of features (or attributes) and therewith associated values or lists of values. The rating history of a user can be exploited to build a profile of this user, geared towards a particular machine-learning algorithm. For instance, for naive Bayesian classification, a popular and simple machine learning algorithm, this profile can be thought of as containing like-degrees for individual feature-value pairs.

Summarizing, the second type of recommender systems only requires the likes and dislikes of a single user, resulting in several advantages over the first type in that there is no need to create a community of users, no need for some central communication or processing facility, and in that privacy is thus much less of an issue. In turn, an advantage of the first type over the second type of recommender systems is that no metadata is required, making collaborative filtering inherently suitable to provide recommendations across multiple domains, that is, to consider books, movies, food items, in one context.

However, for metadata-based recommender systems, the ability to make cross-domain recommendations is limited by the scope of the metadata in an existing profile. For example, a profile concerning the domains "movies" cannot directly be used for recommendations about content items in the domain "food". That is to say, there is the problem that a user who has not yet built a profile in a certain domain cannot receive good recommendations for content items in that domain, if at all.

### SUMMARY OF THE INVENTION

Therefore, it is one object of the present invention to provide an apparatus and method, by means of which recommendations can be inferred for content items of a new domain based on one or more profiles from known domains.

This object is achieved by an apparatus as claimed in claim 1, a method as claimed in claim 13 and a computer program product as claimed in claim 16.

In general, the gist of the invention is using rating histories of one or more known domains to produce or infer a rating history for content items in a new domain. In some more detail, this is achieved by means of computing like-degrees for feature-value pairs for the new domain based on forming and using translations and/or relations between information from profiles in the known domains and in the new domain. These translations or relations are exploited to extend profile information, comprised of like degrees of feature-value pairs, in the known domains into the new domain. Moreover, thereby inferred new profile information for new domains may be subsequently generalized. In other words, the method underlying the invention may be separated into two aspects: The first aspect concerns how to extend profiles from the known domain(s) to the new domain using translations and relations between feature spaces of the known domain(s) and the new domain. The second aspect concerns the generalization of the so obtained profile information for content items in the new domain by using recommendation techniques.

As result, the invention provides a cross-domain recommender by which a rating history can be generated for content items in a new domain. In this context, as mentioned above, a rating history may be understood as a list of content items of the respective domain, each connected with a classification, which may be e.g. a rating provided by or monitoring a user. This is especially advantageous since not all machine learning algorithms use like-degrees, but, in general, make use of rating histories, which each algorithm for itself translates/digests into a profile.

Such rating history can be transformed into profile information that can be geared towards a machine-learning algorithm. For example, in the context of application of the naive Bayes algorithm, profiles are merely positive and negative counts for individual feature-value pairs, from which like-degrees can be inferred. But for decision trees, neural networks, or support vector machines, the profile is less intuitive, and not necessarily can like-degrees be inferred. As said, generally a common characteristic is the use of rating histories. By the cross-domain recommender of the invention such useful rating history can be generated in a new domain. Accordingly, the whole cross-domain recommendation functionality is preferably based on profiles based on like degrees of feature-value pairs.

Accordingly, the apparatus for controlling a recommender system to provide cross-domain recommendations comprises:
a) a first storage containing known profile information for content items, defined by at least one feature and belonging to at least one known domain, wherein the profile information comprises like-degrees for at least one feature-value pair for at least one user of the apparatus;
b) a second storage for profile information to be obtained for new content items, defined by at least one feature and belonging to a new domain;
c) a third storage containing translation information linking the at least one feature of the new domain with at least one of the at least one feature of the at least one known domain, i.e. there need not be a one-to-one relation between features;
d) an extension unit configured to perform an extension operation for extending the known profile information to profile information for the new content items of the new domain based on the translation information; and
e) a recommender unit configured for a generalization operation for the profile information obtained in the new domain, wherein the recommender unit is configured
   to use a subset of the features of the new domain for which information is available,
   to choose a set of items from the new domain, preferably randomly, and
   to compute, using the subset of features, a score for each of the items in the chosen set of items.

Preferably, the apparatus further comprises a transformation unit which is configured to transform available information in form of rating histories in the known domains into the respective profile information for the respective domain. A rating history, in this context, comprises content items of the domain each in connection with a respective classification of the content item. It goes without saying that there may be a translation unit for each known domain or one or several units for that purpose.

According to a first embodiment, the translation information is stored as at least one translation table defining the linking information.

According to a second embodiment which can be combined with the above first embodiment, the extension unit is configured to perform the extension operation by inferring like-degrees of feature-value pairs in the new domain based on like-degrees of corresponding feature-value pairs in the at least one known domain in accordance with the translation information.

According to a third embodiment which can be combined with any one of the above first and second embodiments, the extension unit is configured to calculate for a given feature-value pair in the new domain, a weighted, normalized average of the like-degrees of feature-value pairs in the at least one known domain that are linked by the associated translation table to the given feature-value pair in the new domain, and to use the calculated weighted, normalized average as a like-degree for the given feature-value pair in the new domain.

In a further development of the third embodiment, the extension unit is further configured to set the weights based on confidence values supplied by or learned by monitoring the user. The confidence values may reflect the confidence the user of the system or the system itself has in the like-degree of each of the feature-value pairs. Alternatively, the extension unit may be further configured to set the weights based on the respective like-degrees themselves. Confidence values may be calculated from a rating history, as can be gathered e.g. from V. Pronk et al., in "Incorporating confidence in a naive Bayesian classifier", LNAI 3538, Springer, Proceedings of the 10th International Conference on User Modeling, UM'05, Edinburgh, Scotland, July 24-29, 317-326.

According to a forth embodiment which can be combined with any one of the above first to third embodiments, the extension unit can be further configured to further extend the known profile information of at least one known domain as profile information for content items of the at least one new domain based on relation information between features in the new domain and/or features in the known domain. In certain embodiments, the relation information comprises an ontology or, if the features are keywords, a thesaurus.

According to a fifth embodiment that can be combined with any one of the above first to forth embodiments, the extension unit is further configured to combine the results of multiple extension operations based on information from multiple known domains.

According to a sixth embodiment which can be combined with any one of the above first to fifth embodiments, the recommender unit is further configured to individually classify the items in the chosen set of items using their computed scores by at least one classification value from a predetermined group of classification values, thereby providing a new rating history for the new domain.

Advantageously, the new rating history generated by the cross-domain recommender for the new domain can be used by any machine learning algorithm to generate a "full" profile, i.e. corresponding to the specifics of the algorithm. For example, in case the algorithm in the new domain is based on naive Bayesian classification, the "full" profile is an extension of the profile initially used to create a rating history in the new domain.

As mentioned above, not all machine learning algorithms use like-degrees, but they do use, in general, rating histories, which each algorithm for itself translates/digests into a profile. In the context of the Naive Bayes algorithm, profiles are merely positive and negative counts for individual feature-value pairs, from which like-degrees can be inferred. But for decision trees, neural networks, or support vector machines, the profile is less intuitive, and not necessarily can like-degrees be inferred. As said, all algorithms do generally have in common this rating history. The cross-domain recommender of the invention includes generating a rating history in the new domain.

The invention further relates to a method of controlling a recommender system providing cross-domain recommendations. The method comprises the same advantages as the afore-described apparatus.

Accordingly, said method comprises the steps: a) storing known profile information for content items, defined by at least one feature and belonging to at least one known domain, wherein the profile information further comprises like-degrees for at least one feature-value pair for at least one user of the apparatus; b) storing profile information for content items, defined by at least one feature and belonging to a new domain; c) forming translations, which define linking information between at least one feature of at least one known domain and at least one feature of the new domain, or relations, which define linking information between features in the new domain and/or features in the at least one known domain, respectively; and d) extending the known profile information as new profile information for the content items of the new domain based on the translation information, and f) generalizing the generated profile in the new domain by i) using a subset of features of the new domain for which information is available, ii) choosing a set of items in the new domain, preferably randomly, and iii) computing, using the subset of features, the scores for each of the items in the set of items.

The method may further comprise the step: g) classifying the items in the chosen set of items using their computed scores by at least one classification value from a predetermined group of classification values, thereby providing a new rating history in the new domain.

Finally, the invention also relates to a computer program product that comprises code means or coded instructions, which cause a computer device or processor to produce or perform the steps of one of the methods of the invention, when the code means or coded instructions are executed on the computer device or processor. Accordingly, it is worth to be noted that the above described apparatus for controlling a recommender apparatus or system can be implemented as discrete hardware circuitry with discrete hardware components, as an integrated chip, as an arrangement of chip modules, or as a signal processing device or computer device or chip controlled by a software routine or program stored in a memory.

### BRIEF DESCRIPTION OF THE DRAWINGS

The invention will now be described, by way of example, based on embodiments with reference to the accompanying drawings, wherein:
Fig. 1 shows a schematic block diagram of a recommender system in which the present invention can be implemented; and
Fig. 2 shows a schematic block diagram of a first embodiment with a recommender comprising the functionality of the invention.

### DESCRIPTION OF EMBODIMENTS

Embodiments of the present invention will now be described based on an exemplary recommender system which is able to generate ratings and thus recommendations on new content items in a new domain, such as books, TV programs, movies, etc., based on information about content items in at least one known domain.

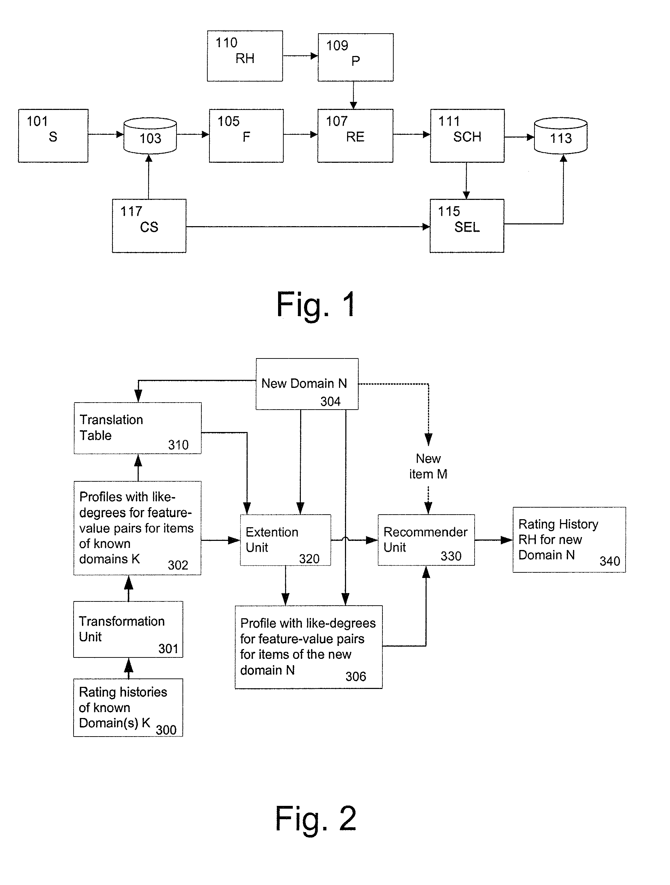

Fig. 1 shows a schematic block diagram of the recommender system which comprises an information data store 103 connected to at least one source (S) 101, which may be, for example, A/V content repositories, product catalogues, and the like. For instance, an A/V content repository can be an electronic program guide (EPG) service provided via the Internet, which provides information data on content items, for example, on television (TV) programs. The information data store 103 can be connected to at least one filter (F) 105, which is associated with a personalized content channel. It is noted that any number of personalized content channels may be provided.

The output of the filter 105 is connected to a respective recommender engine (RE) 107. Thus, each personalized content channel may have an own recommender engine 107 associated therewith. Each recommender engine 107 and hence personalized content channel has a profile (P) 109 based on a rating history (RH) 110 associated therewith. The output of the recommender engine 107 is connected to a scheduler (SCH) 111. The scheduler 111 is connected to a storage device 113, e.g. one or more hard disk drives of, for example a DVT or PVR or the like, and to a selector (SEL) 115.

The information data store 103 is also connected to a content source (CS) 117. The content source 117 provides, for example, A/V content items in a broadcasting or on-demand fashion. In addition, the content source 117 may provide besides the content information additional information data, i.e. metadata, such as the EPG information inside the video or audio signal.

The content source 117 is further connected to the selector 115 comprising at least one set of content isolation means, e.g. a tuner or the like, allowing to isolate one or more content items for recording on the storage device 113. The output of the selector 115 is connected to the storage device 113.

In the following the operation of the apparatus of Fig. 1 is described. Information data or metadata for a current content item to be played out on one personalized content channel is received from the source 101, i.e. from, for example, the Internet. Alternatively, information data or metadata may be obtained via other means, e.g. via transmission in the vertical blanking interval of an analogue TV broadcast signal or contained within digital video broadcast (DVB) transport streams, or any combinations of any of the above. In the context of the exemplary embodiment, a content item may be a TV program, data stream containing video and/or audio data or a segment of a program etc.

The information data may be associated with multiple domains, such as "TV shows", "movies", "books", "food", etc. Further, content items in each domain may be characterized by one or a plurality of features (or attributes). Thus, feature values (or attribute values) can be associated with a content item, e.g. for the domain "movies", there may be features such as "title", "actors", "director" and "genre". As mentioned in the introduction, the features and the associated feature-values represent metadata for the respective content items, where each feature-value pair (or attribute-value pair) can further be associated with like-degrees in accordance with the individual rating of a user.

Thus, the rating history of a user can be exploited to build or create a user profile 109 of this user. Accordingly, in the context of a personalized content channel, each profile 109 is based on the information data together with data indicating the "likes" and "dislikes" of the respective user.

The rating in the simple form of e.g. "like" and "dislike" can be based, for instance, on user feedback on content items that pass the associated filter 105. This feedback can be given as explicit rating by the users that use the particular personalized content channel. Ratings by the user can be made in several ways. For example, the user can, e.g. by means of a remote control device as user interface (UI), indicate for a currently selected content item or a given feature of the current content item his or her rating, i.e. for example "like" or "dislike", by pressing appropriate buttons on the user interface, whilst viewing the current content item. In a more advanced setting, a "like" degree on a discrete or continuous scale can be provided or calculated instead of just a "like" or "dislike" classification.

Moreover, use or user profiles can be derived using implicit profiling and explicit profiling. Implicit profiling methods derive content use profiles unobtrusively from the user's use histories, e.g., sets of TV shows watched and not watched. Explicit profiling methods may derive content use profiles by letting the user specify ratings on the level of content items.

When information data of a content item passes the filter 105, this information data is forwarded to the recommender engine 107. The recommender engine calculates a score, based on its associated profile 109, for this subsequent content item. The information data associated to the subsequent content item is then forwarded, along with the computed rating, to the scheduler 111, which subsequently computes e.g. a recording schedule that will be used to schedule the recording of content items offered by the recommender engine 107 onto the storage device 113. In particular, the scheduler 111 may primarily consider the content items of high score or rating while still considering sufficient new content for each personalized content channel.

To this end, the recording schedule computed by the scheduler 111 can be used to instruct the selector 115 to select the content items available from the content source 117 to record those selected content items on the storage device 113.

Now with respect to the first aspect of the invention, which relates to extending a profile, which is based on like degrees of feature-value pairs. For a discussion of extending profiles from known domains into new domains in more detail, it is firstly assumed that there is at least one known domain K and at least one new domain N.

It is assumed that in each known domain, there is information about the tastes of the user available that can be translated to a collection of like-degrees on feature-value pairs in these domains. This information would preferably be a rating history, containing, for a set of content items, the user's "likes" and "dislikes", for each individual content item. Translating this to a profile containing like-degrees can be done by generating a profile for a naive Bayesian classifier. Such a profile contains plus and minus counts for individual feature-value pairs, which can be translated into like-degrees, see *"Incorporating user control into Recommender Systems based on Naive Bayesian Classification",* by Pronk, V., W. Verhaegh, A. Proidl, and M. Tiemann, in Proc. ACM Recommender Systems, RecSys'07, Minneapolis, MN, USA, Oct 19-20.

It is further assumed that there is at least some overlap, i.e. some correlation, between the two domains. For example, for the known domain K assumed being "movies" and the new domain N assumed being "books", the feature "genre" is present, albeit not necessarily identically defined, in both domains K and N. In contrast, it seems unlikely that, when two domains do not have any overlap, that the known domain could provide substantial information being useful for the new domain, as, for example, in the case of the domain "stamps" and the domain "recipes".

In other words, a new domain N can be characterized by features and its associated values, some of which, due to the above mentioned correlation, correspond directly or closely to some features and associated values in the known domain K. For example, the feature "genre" in the domain of "movies" has a strong relation to the feature "genre" in the domain of "books". Further, the genre "science fiction" occurs in both domains "movies" and "books". Furthermore, the genre "romantic fiction" in the domain "books" translates into the two genres "romance" and "fiction" existing in the domain "movies".

According to the first aspect, in this case, a possibly handcrafted, i.e. predetermined, or generated by machine learning a *translation operation* can be performed by means of e.g. a translation table between the two feature spaces. Thus, by this translation, like-degrees of feature-value pairs in the new domain N are inferred based on known like-degrees of corresponding feature-value pairs in the known domain K.

In a preferred embodiment, for a given feature-value pair in the new domain N, a weighted, normalized average of the like-degrees of those feature-value pairs in the known domain K, which translate into the given feature-value pair in new domain N, is calculated and used as a like-degree for the latter. According to a further development, the weights are based on the confidence the user has in each of the involved feature-value pairs. Alternatively, the weights are based on the respective like-degrees themselves. Any weighting that is carried out can also be based on the maturity of the profiles in the respective, known domain K.

According to a just further development, to further extend information on like degrees of feature-value pairs, from the known domain K to the new domain N, *relations* between feature-value pairs in the known domain K and/or in the new domain N are used. Such relations can be implemented in or defined by an ontology. In this context, an ontology is considered as a formal representation of a set of features within a domain and the relationships between those features. Accordingly, the ontology can be used to reason about the properties of that domain, as well as may be used to define the domain. In simple cases, where a domain is defined simply by keywords, such relations can be implemented as a thesaurus.

For example, assume that the domain "news items" has a feature called "location", indicating where the "news item" comes from. Further, assume that the domain "movies" has a feature called "country of production". Now, the relation "lies in" from "cities" to "countries" can be used to infer like-degrees of "location" values in the domain "news items" from like-degrees of "country of production" values in the domain "movies". In this way, for a user who, for example, likes Italian movies, using this type of inference provides information on "news items" originating from Italian cities. It goes without saying that although this inference need not be correct in the sense that this user would indeed like "news items" from "Italian cities", but in view of the lack of any other information, it is better than nothing.

Summarizing, by means of the extension operation, like-degrees for a potentially considerable number of feature-value pairs in the new domain N can be inferred from the known domain K, thus extending information on like degrees of feature-value pairs from the known domain(s) K to the new domain N.

According to a further development, when a number of known domains K1, K2, Ki, ..., Km (with i=1 ... m) are used to infer like-degrees in N, multiple translation tables and relations, i.e. ontologies or thesauri, are combined.

For example, for the known domains "books" and "travel" and the new domain "movies", the feature "genre" in the domain "movies" may, as described above, borrow from the domain "books". Further, the feature "country of publication" in the domain "movies" may borrow from both the domains "books" and "travel". Thus, more information is provided with respect to the feature "country of publication" than when only borrowing from one known domain Ki. In addition, from yet another known domain "news items", even more information on the feature "country of publication" in the domain "movies" can be inferred from the feature "location" of the domain "news items" by using the ontology mentioned above.

Now with respect to the second aspect, for the information on like degrees of feature-value pairs obtained in a new domain N, as described above, a *generalization operation* is performed by making use of a recommender that only takes those features into account for which there is already information available. To this end, a set of content items in the new domain N is chosen, preferably randomly, and the set should not be too small. Then, the recommender, using the subset of features, computes a score for each of these items and classifies each of them, for example as "positive", "negative", or, optionally, "undetermined". Finally, the "positives" and "negatives" can next be used as input, i.e. as a new rating history, to train a recommender that takes all features into account.

The foregoing described method and system for cross-domain recommendation can be used for online setting. When a user rates a content item in a given domain, this will result in an update of his/her information on like degrees of feature-value pairs in this domain. Next, this update can propagate to different, other domains connected directly or indirectly to the given domain by the herein described translation tables, ontologies, or thesauri.

As a result, over time, information on like degrees of feature-value pairs in a given domain, is updated either directly by ratings, e.g. by the user, in this domain, i.e. an internal update takes place, or indirectly by the propagation of information from connected domains, i.e. an external update is performed.

One way to elegantly deal with these two types of updates is to use a so-called integrated recommender; for which further information may be gathered from *"Incorporating user control into Recommender Systems based on Naive Bayesian Classification",* by Pronk, V., W. Verhaegh, A. Proidl, and M. Tiemann, in Proc. ACM Recommender Systems, RecSys'07, Minneapolis, MN, USA, Oct 19-20. The value in the integrated recommender can be flexibly used to gradually or suddenly exclude the influence of external updates.

Fig. 2 shows a schematic diagram of basic steps, elements or components of a control apparatus, which implements the proposed cross-domain recommendation functionality. Given a new content item out of a new domain N, 304, for which domain no profile information comprised of like degrees of feature-value pairs is available, and which item may be offered to the user. The control apparatus or system is configured to use profile information comprised of like degrees of feature-value pairs contained in known domains K.

Such profile information in the known domains may be gathered or derived from rating histories available in the known domains K, 300. By means of a transformation unit 301 the rating information in the respective rating histories can be transformed or translated into profile information 302 comprised of like degrees of feature-value pairs for items of the respective known domain K.

According to the first embodiment, at least one predetermined *translation operation* is implemented by an extension unit 320 based on information provided by in a translation table 310. According to the invention, in general, the information in the translation table 310 links the feature space of the new domain N, 304, with the feature space of a known domain K, 300, and thereby, with the respective profile information, comprised of like degrees of feature-value pairs, 302, for the user in the respective known domain 300. The information defined in the translation table 310 is provided to the extension unit 320. The extension unit 320 can infer like-degrees of feature-value pairs 306 in the new domain N, 304, based on the known like-degrees of corresponding feature-value pairs 302 in the respective known domain K, 300. This results in the generation of profile information, i.e. in the form of like degrees of feature-value pairs 306 for content items of the new domain N, 304.

As mentioned above, the extension unit 320 may be configured to calculate a weighted, normalized average of the like-degrees of a feature-value pair 302 in a known domain K, 300, which translate by means of the translation table 310 into the given feature-value pair in new domain N, 304. Optionally, the weights can also be fed into the extension unit 320 as weight values that are based on the confidence values that have been associated with each of the involved feature-value pairs in the known domain(s). Alternatively, the extension unit 320 can be configured to base the weights on the respective like-degrees themselves.

Next, a recommender unit 330 performs a *generalization operation* on the profile information comprised of like degrees of feature-value pairs 306 gathered for the new domain N, 304, by the extension unit 320. For that purpose the recommender unit 330 is configured to use only those features in the new domain N, 304, for which already information is available as result of the *extension operation.* To this end, the recommender unit 330 is configured to select a set of content items, preferably by means of a random generator, in the new domain N, 304. Then, the recommender unit 330 is further configured to compute scores for each of these content items by using the subset of features. Based on the computed like-degrees, the recommender unit 330 is configured to classify each of the content items, e.g. as "positive", "negative", or, optionally, "undetermined". Recommender 330 could be a naive Bayesian classifier, which produces a rating history in the new domain, to be used by a suitable machine-learning algorithm in that domain.

The list of content items in connection with its respective classifications, i.e. in the example the values "positives" and "negatives", may be provided as the new rating history RH, 340, to train a further recommender unit (not shown) that is configured to take all features of the new domain into account. For that purpose, any known machine-learning algorithm may be used to realize the further recommender unit.

For example, learning algorithms that can make use of rating histories, such as naive Bayesian classification, decision trees, support vector machines, neural networks etc., may be applied. Each algorithm for itself translates/digests a rating history into a profile. As mentioned above, for naive Bayes, a profile is merely a collection of "positive" and "negative" counts for individual feature-value pairs, from which like-degrees can be inferred.

As already indicated above, the cross-domain recommendation functionality of the invention can be applied to (Internet-enabled) TV sets, e.g. IPTV, PVRs, set-top boxes, audio systems including portable audio, and services including Internet video and music services, mobile phones, personal digital assistants (PDAs), personal computers (PCs) and all devices where recommenders are used to collect, filter, and present content from multiple sources to their users. The invention is thus not restricted to recommenders of television or film content, but can be applied to music, theatre shows, books and all types of products and services for which recommenders can be built.

In summary, an apparatus, method, and computer program product for controlling a recommender system have been described. For metadata-based recommender systems, the ability to make cross-domain recommendations is limited by the scope of the metadata in a profile. For example, a profile concerning movies cannot be used directly to do recommendations about food items. The problem is that a user who has not yet built a profile in a certain domain cannot receive good recommendations in that domain. An apparatus for controlling a recommender system is disclosed which provides recommendations in a new domain by using one or more profiles from other, known domains. This is achieved by forming or using translations or relations between the known domains and the new domain and by exploiting these translations or relations to extend the profiles in the known domains into the new domain. The thus generated profile in the new domain may subsequently be generalized.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfil at least the functions of Fig. 3 and Fig. 4 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

## Claims

1. An apparatus for controlling a recommender system providing cross-domain recommendations, said apparatus comprising:
a) a first storage containing known profile information for content items, defined by at least one feature and belonging to at least one known domain (K), wherein the profile information comprises like-degrees for at least one feature-value pair for at least one user of the apparatus;
b) a second storage for profile information for content items, defined by at least one feature and belonging to a new domain (N);
c) a third storage containing translation information linking the at least one feature of the new domain (N) with a corresponding one of the at least one feature of the at least one known domain (K);
d) an extension unit (320) configured to perform an extension operation for extending the known profile information as profile information for the content items of the new domain based on the translation information, and
e) a recommender unit (330) configured for a generalization operation for the profile information obtained in the new domain (N),
wherein the recommender unit (330) is configured
to use a subset of the features of the new domain (N) for which information is available,
to choose a set of items in the new domain (N), preferably randomly, and
to compute, using the subset of features, a score for each of the items in the set of items.

2. The apparatus according to claim 1, further comprising a transformation unit (301) configured to transform rating histories of the known domains (K) into the respective profile information for the respective domain, wherein a rating history comprises content items of the domain each in connection with a respective classification of the content item.

3. The apparatus according to claim 1, wherein the translation information is stored as at least one translation table with the linking information.

4. The apparatus according to one of the claims 1 to 3, wherein the extension unit (320) is configured to perform the extension operation by inferring like-degrees of feature-value pairs in the new domain (N) based on like-degrees of corresponding feature-value pairs in the at least one known domain (K) in accordance with the translation information.

5. The apparatus according to claim 4, wherein the extension unit (320) is further configured
to calculate for a given feature-value pair in the new domain (N), a weighted, normalized average of the like-degrees of feature-value pairs in the at least one known domain (K) that are linked by the associated translation table to the given feature-value pair in the new domain (N), and
to use the calculated weighted, normalized average as a like-degree for the given feature-value pair in the new domain (N).

6. The apparatus according to claim 4, wherein the extension unit (320) is further configured to set the weights based on confidence values supplied by or learned by monitoring the user, wherein the confidence values reflect the confidence the user of the system or system itself has in each of the feature-value pairs.

7. The apparatus according to claim 4, wherein the extension unit (320) is further configured to set the weights based on the respective like-degrees themselves.

8. The apparatus according to one of the preceding claims, wherein the extension unit (320) is further configured to further extend the known profile information of at least one known domain (K) as profile information for content items of the new domain (N) based on relation information between features in the new domain and/or features in the at least one known domain.

9. The apparatus according to claim 8, wherein the relation information comprises an ontology or, if the features are keywords, a thesaurus.

10. The apparatus according to one of the preceding claims, wherein the extension unit (320) is further configured to combine the results of multiple extension operations based on information from multiple known domains.

11. The apparatus according to claim 1, wherein the recommender unit (330) is further configured to individually classify the items in the chosen set of items using the computed scores by at least one classification value from a predetermined group of classification values, thereby providing a new rating history in the new domain.

12. The apparatus according to claim 11, wherein the recommender unit (330) is further configured to forward the new rating history to a further recommender unit, which is configured to be trained by the new rating history and thereby to generate a user profile for more feature-value pairs in the new domain, based on metadata of the items in the rating history.

13. A method of controlling a recommender system providing cross-domain recommendations, said method comprising the steps:
a) storing known profile information for content items, defined by at least one feature and belonging to at least one known domain (K), wherein the profile information further comprises like-degrees for at least one feature-value pair for at least one user of the apparatus;
b) storing profile information for content items, defined by at least one feature and belonging to a new domain (N);
c) forming translations, which define linking information between at least one feature of at least one known domain (K) and at least one feature of the new domain (N), or relations, which define linking information between features in the new domain and/or features in the at least one known domain, respectively; and
d) extending the known profile information as profile information for the content items of the new domain based on the translation information, and
f) generalizing the generated profile in the new domain by
i) using a subset of features of the new domain (N) for which information is available,
ii) choosing a set of items in the new domain (N), preferably randomly, and
iii) computing, using the subset of features, a score for each of the items in the set of items.

14. The method according to claim 11, wherein said method further comprising the step:
g) classifying the items in the chosen set of items using the computed scores by at least one classification value from a predetermined group of classification values, thereby providing a new rating history in the new domain.

15. The method according to claim 13, wherein said method further comprising the steps:
h) forwarding the classified items of the set as a new rating history to a further recommender unit,
i) training the further recommender unit by means of the new rating history; and
j) thus, generating a user profile for more feature-value pairs in the new domain, based on metadata of the items in the rating history.

16. A computer program product comprising code means for producing the steps of the method of one of the claims 13 to 14 when run on a computer device.
